# EUROPÄISCHE PATENTSCHRIFT

(11) **EP 3 959 511 B1**
(45) Veröffentlichungstag und Bekanntmachung des Hinweises auf die Patenterteilung: **19.02.2025**
(21) Anmeldenummer: 20711899.3
(22) Anmeldetag: 16.03.2020
(51) Int. Cl.: F26B 3/347, H05B 6/64

(54) **VERFAHREN UND VORRICHTUNG ZUM ERMITTELN DER MATERIALFEUCHTIGKEIT EINES MATERIALS**
METHOD AND DEVICE FOR DETERMINING THE MATERIAL MOISTURE OF A MATERIAL
PROCÉDÉ ET DISPOSITIF DE DÉTERMINATION DE LA TENEUR EN HUMIDITÉ D'UN MATÉRIAU

(30) Priorität: 24.04.2019 DE 102019110537
(43) Veröffentlichungstag der Anmeldung: 02.03.2022
(73) Patentinhaber: Rheinmetall Waffe Munition GmbH, 29345 Südheide (DE)
(72) Erfinder: SCHMITZ, Jürgen, 38518 Gifhorn (DE); JUNG, Markus, 29345 Unterlüß (DE); CAMP, Michael, 29221 Celle (DE); LINKE, Katrin, 38122 Braunschweig (DE)
(74) Vertreter: DREISS Patentanwälte PartG mbB
(86) Internationale Anmeldenummer: PCT/EP2020/057030
(87) Internationale Veröffentlichungsnummer: WO 2020/216528

(56) Entgegenhaltungen:
- WO-A1-00/14552
- WO-A1-2018/141630
- CH-A5- 604 163
- CN-A- 101 221 009
- DE-A1- 10 204 328
- DE-B3- 102005 013 647
- US-A- 5 397 993
- J MELLMANN ET AL: "Development of the Heat and Mass Transfer Model for Mixed-Flow Grain Dryer", PROCEEDINGS OF THE 17TH WORLD CONGRESS THE INTERNATIONAL FEDERATION OF AUTOMATIC CONTROL, 6 July 2008 (2008-07-06), Seoul, Korea, pages 9591 - 9595, XP055706508, DOI: 10.3182/20080706-5-KR-1001.4029
- J. MELLMANN ET AL: "Development of the Heat and Mass Transfer Model for Mixed-Flow Grain Dryer", 5TH IFAC SYMPOSIUM ON MODELLING AND CONTROL IN BIOMEDICAL SYSTEMS 2003, MELBOURNE, AUSTRALIA, 21-23 AUGUST 2003, vol. 41, no. 2, 1 January 2008 (2008-01-01), pages 9591 - 9595, XP055705310, ISSN: 1474-6670, DOI: 10.3182/20080706-5-KR-1001.01622
- J MELLMANN ET AL: "Development of the Heat and Mass Transfer Model for Mixed-Flow Grain Dryer", PROCEEDINGS OF THE 17TH WORLD CONGRESS THE INTERNATIONAL FEDERATION OF AUTOMATIC CONTROL, 6 July 2008 (2008-07-06), Seoul, Korea, pages 9591 - 9595, XP055706508, DOI: 10.3182/20080706-5-KR-1001.4029

## Beschreibung

Die Erfindung betrifft ein Verfahren zum Ermitteln der Materialfeuchtigkeit eines pyrotechnischen und/oder explosiven Stoffs.

Weiterhin betrifft die Erfindung eine Vorrichtung zum Ermitteln der Materialfeuchtigkeit eines pyrotechnischen und/oder explosiven Stoffs.

Die Herstellung der meisten industriellen Pulver und Schüttgüter ist ein sensibler Prozess, bei dem geringfügige Änderungen der stofflichen Parameter zu erheblichen Abweichungen der Qualität führen können. Eine der wichtigen Stoffgrößen ist die Materialfeuchtigkeit. Im Herstellungsprozess führen Schwankungen der Materialfeuchtigkeit zur Gefährdung der gewünschten Produktqualität.

Um eine gewünschte Materialfeuchtigkeit zu erhalten, werden solche Stoffe getrocknet. Zur Trocknung stehen verschiedene Verfahren zur Verfügung, wie beispielsweise Lufttrocknung (Dörren oder Reifung), Gefriertrocknung, Mikrowellentrocknung, Kondensationsverfahren, usw.

Grundsätzlich werden für jeden Trocknungsprozess bestimmte Eingangsgrößen benötigt, wie Feuchtigkeit vor und am Ende des Trocknungsprozesses, um Prozessparameter wie die benötigte Energie einstellen zu können. Die Restfeuchtigkeit in einem Material kann über verschiedene Verfahren bestimmt werden, wobei grundsätzlich zwischen den direkten und den indirekten Trocknungsverfahren unterschieden wird.

Bei dem Dörr-Wäge-Verfahren, das ein direktes Verfahren darstellt, wird die Probe getrocknet und über den Massenverlust die Feuchtigkeit der Probe bestimmt. Nachteilig an diesem Verfahren ist die lange Trocknungszeit und das die Probe zerstörungsbehaftet entnommen werden muss. Solche Verfahren sind beispielsweise in K. Kuper: Materialfeuchtemessung,

Expert Verlag, 1997 oder in W. Lück: Feuchtigkeit, Grundlagen, Messen, Regeln, Oldenbourg Verlag, 1964 dargestellt.

Bei den indirekten Verfahren werden Veränderungen der Stoffeigenschaften im Zusammenhang mit der Feuchtigkeit betrachtet. Typische Eigenschaften sind u. A. Gewicht, Volumen, elektrische Leitfähigkeit, Dielektrizitätszahl, etc. Bei niederfrequenten Verfahren und Verfahren die auf einer Messung der Leitfähigkeit basieren sind im Vergleich zu hochfrequenten Verfahren im Mikrowellenbereich nicht zerstörungsfrei. Ferner ist es nachteilhaft, dass niederfrequente Verfahren aufgrund des loneneinflusses von Wasser eine erhöhte Störanfälligkeit aufweisen. Ein wesentlicher Vorteil der indirekten Verfahren ist, dass die Messzeiten gegenüber direkten Verfahren um Größenordnungen reduziert sind.

Von den indirekten Messverfahren eignen sich am besten die Verfahren, welche auf Mikrowellen basieren.

Mikrowellenmessverfahren zur Materialfeuchtigkeitsbestimmung zählen zu den dielektrischen Verfahren. Diese basieren auf den dielektrischen Eigenschaften des Wassers, das ein polares Molekül ist, d.h. die Ladungsschwerpunkte fallen innerhalb des Moleküls nicht örtlich zusammen. Das Wassermolekül richtet sich daher in einem von außen angelegten Feld in einer Vorzugsrichtung aus. Mit anderen Worten sind Wassermoleküle polarisierbar. Wird ein solches elektromagnetisches Wechselfeld angelegt, so rotieren die Moleküle mit der Frequenz des Feldes. Dieses Phänomen wird auch Orientierungspolarisation genannt. Dieser dielektrische Effekt ist bei Wasser derart ausgeprägt, dass sich auch kleine Wassermengen bereits zuverlässig detektieren lassen.

J MELLMANN ET AL: "Development of the Heat and Mass Transfer Model for Mixed-Flow Grain Dryer", Proceedings of the 17th World Congress, The International Federation of Automatic Control, 6. Juli 2008 (2008-07-06), Seiten 9591-9595 offenbart bereits die Messung eines Feuchtigkeitsgehalts eines Getreides am Eingang eines Trockners. Der Feuchtigkeitsgehalt des getrockneten Getreides wird am Trocknerausgang kontinuierlich mit einem On-Line-Mikrowellen-Feuchtesensor erfasst. Zusätzlich werden ausgangsseitig vom Getreide Proben entnommen, um den Feuchtigkeitsgehalt zu analysieren.

WO 2018/141630 A1 schlägt eine Trockenkammer vor, die mit einem Magnetron ausgestattet ist. Dieses Magnetron kann dann die erforderliche Mikrowellenstrahlung auf den zu trocknenden Explosivstoff ausüben und den Explosivstoff somit erhitzen.

CN 101 221 009 A betrifft ein Verfahren zur Mikrowellen-Trocknung eines Detonators.

DE 10 2005 013647 B3 betrifft ein Verfahren zur Messung der Materialfeuchte eines Messgutes mithilfe eines Mikrowellenresonators.

CH 604 163 A5 offenbart einen Mikrowellen-Feuchtigkeitsmesser zum Messen des Feuchtigkeitsgehalts.

DE 102 04 328 A 1 offenbart die Verwendung von Mikrowellen in der Spinnereiindustrie zum Ermitteln der Bandmaße eines länglichen, im Wesentlichen umgedrehten Faserverbandes. Dabei ist einem Streckwerk ein Mikrowellensensor nachgeschaltet, der nicht nur eine Bandauslaufkontrolle durchführen kann, sondern auch zur Kalibrierung eines anderen Sensors herangezogen werden kann, der mit Mikrowellen arbeitet.

DE 42 24 128 A1 offenbart ein Verfahren zum Bestimmen von Feuchte von tonhaltigem Material und dergl. formbaren Massen für die Herstellung von keramischen Erzeugnissen und eine Beschickungsvorrichtung, an welcher das Verfahren durchgeführt wird.

Aus der DE 102 46 260 A1 ist eine Vorrichtung zur Feuchtigkeitsregulierung, insbesondere zur Regulierung der Feuchtigkeit eines Schüttguts, zum Beispiel von Weizen in einer Mühlenanlage bekannt.

DE 91 06 191 U1 offenbart eine Vorrichtung zur Feuchtigkeitsmessung von grob- und feinkörnigen Schüttgütern im Online-Betrieb. Die Vorrichtung umfasst einen Mikrowellenmesssensor und eine Signalverarbeitungseinheit sowie einen Steuerrechner. Für die Korrektur des Messsignals werden die Temperatur und die Leitfähigkeit des Messgutes durch einen Temperatursensor und einen Leitfähigkeitssensor. Nachteilig hierbei ist, dass zwei weitere Messgrößen durch zwei weitere Sensoren online gemessen werden müssen. Dies hat sich als wenig praktikabel erwiesen.

Ausgehend davon, liegt der Erfindung die Aufgabe zugrunde, ein Verfahren zu schaffen, mit dem zuverlässig die Materialfeuchtigkeit eines pyrotechnische und/oder explosive Stoffs ermittelt werden kann.

Diese Aufgabe wird durch die Merkmale des Anspruchs 1 sowie des Anspruchs 8 gelöst. Vorteilhafte Ausgestaltungen und Weiterbildungen sind Gegenstand der jeweiligen Unteransprüche.

Der pyrotechnische und/oder explosive Stoff wird nachfolgend auch kurz als "Material" bezeichnet, das vorzugsweise ein Schüttgut oder Festkörper ist.

Das Verfahren wird mittels einer Vorrichtung umfassend einen ersten und einen zweiten Mikrowellensensor und zumindest einer Steuerungs- und Auswerteeinrichtung durchgeführt.

Vorzugsweise kann das Verfahren vorsehen, dass der Schritt des Referenzierens des Materials mit einer Referenziervorrichtung offline stattfindet.

Ferner kann vorgesehen sein, dass die Referenziervorrichtung zum Referenzieren des Materials offline angeordnet ist.

Dabei wird das Ermitteln der dielektrischen Materialkonstanten der Materialprobe in Abhängigkeit der Materialfeuchtigkeit mit einer Mikrowellenmesseinrichtung durchgeführt.

Nach dem Ermitteln der dielektrischen Materialkonstanten der Materialprobe wird diese abgespeichert.

Der Schritt des Ermittelns der Materialfeuchtigkeit des Materials wird anhand der zuvor online gemessenen dielektrischen Materialkonstanten durch eine Steuerungs- und Auswerteeinrichtung durchgeführt.

Bei dem Material K handelt es sich um einen pyrotechnischen und/oder explosiver Stoff.

Der Einsatz von Mikrowellenmesssensoren hat dank der verwendeten schwachen Sendenergie den Vorteil, dass es nicht zu einer Materialerwärmung oder -veränderung kommt und so das Risiko minimiert wird, dass das Material oder der Messvorgang an sich beeinträchtigt werden.

Die Ermittlung der dielektrischen Materialkonstanten kann beispielsweise durch ein hochfrequentes Messverfahren mit z.B. dem Bischoff-Verfahren oder einem Vincent-Verfahren als leitungsbasiertes 2-Tor Verfahren mit einem vektoriellen Netzwerkanalysator durchgeführt werden.

Online im Sinne der Erfindung bedeutet, dass dies entlang einer Produktions-, Trocknungs-, Transport- oder sonstigen Linie geschieht. Offline bedeutet, dass ein Messen oder dergleichen unabhängig von einer solchen Linie stattfindet.

Bei dem zu kalibrierenden Messsensor kann es sich sowohl um einen resonanten 1-Tor oder einen transmittierenden 2-Tor Mikrowellenmesssensor handeln, der berührungslos die dielektrischen Materialkonstanten und somit die Materialfeuchtigkeit misst Der Mikrowellensensor ist derart beschaffen, dass eine Messung und Auswertung in Echtzeit erfolgen kann. Die Einstellung der Messung und die Kontrolle der Prozessparameter kann über Mikrokontroller, eingebettete in die Auswerte- und Steuereinheit erfolgen.

Der Schritt des Referenzierens kann beispielsweise nach einem Dörr-Wäge-Verfahren stattfinden.

Durch die erfindungsgemäße Ausgestaltung ist eine berührungslose und zerstörungsfrei Messung der Restfeuchtigkeit in Echtzeit möglich. Erfindungsgemäß ist somit eine Echtzeitmessung der Feuchtigkeit über die die elektrischen Materialkennziffern möglich. Anhand des erfindungsgemäßen Verfahrens und der erfindungsgemäßen Vorrichtung ist eine Prozesseinstellung und Validierung der Restfeuchte möglich.

Erfindungsgemäß ist vorgesehen, dass das Verfahren die folgenden Schritte umfasst Online-Messen der dielektrischen Materialkonstanten des Materials mittels eines zweiten Mikrowellensensors; Erneutes Ermitteln der Materialfeuchtigkeit des Materials anhand der zuvor online gemessenen dielektrischen Materialkonstanten.

In Ausgestaltung der Vorrichtung ist vorgesehen, dass die Vorrichtung einen online angeordneten zweiten Mikrowellensensor zum Messen der dielektrischen Materialkonstanten des Materials aufweist, und die Steuerungs- und Auswerteeinrichtung dazu einrichtet ist an anhand der zuvor online gemessenen dielektrischen Materialkonstanten die Materialfeuchtigkeit des Materials zu ermitteln.

Der Schritt des erneuten Ermittelns der Materialfeuchtigkeit des Materials anhand der zuvor online gemessenen dielektrischen Materialkonstanten wird durch die Steuerungs- und Auswerteeinrichtung durchgeführt.

Die Schritte des online Messens mittels des zweiten Mikrowellensensors und des erneuten Ermittelns der Materialfeuchtigkeit des Materials finden nach dem erstmaligen Ermitteln der Materialfeuchtigkeit statt.

Hierdurch wird erreicht, dass ein weiteres Mal gemessen wird und die Materialfeuchtigkeit ermittelt wird.

In Ausgestaltung des Verfahrens kann vorgesehen sein, dass das Verfahren ferner den folgenden Schritt umfasst: Validieren der Materialfeuchtigkeit anhand der durch den zweiten Mikrowellensensor gemessenen dielektrischen Materialkonstanten durch die Steuerungs- und Auswerteeinrichtung.

Hierzu findet anhand der zwei Materialfeuchtemesswerte eine Validierung der Materialfeuchte statt. Die Steuerungs- und Auswerteeinrichtung ist dazu eingerichtet eine solche Validierung durchzuführen. Hierzu vergleicht diese die ersten und zweiten online gemessenen dielektrischen Materialkonstanten. Hierdurch werden der erste und der zweite ermittelte Materialfeuchtewert miteinander in Verhältnis gesetzt, also verglichen.

In vorteilhafter Weiterbildung der Vorrichtung kann vorgesehen sein, dass die Steuerungs- und Auswerteeinrichtung dazu eingerichtet ist die Materialfeuchtigkeit zu validieren.

Hierdurch wird erreicht, dass festgestellt wird, ob die ermittelte Materialfeuchtigkeit auch korrekt ermittelt wurde. Sofern Abweichungen oder Fehler auftauchen, wird dies erkannt.

Der Schritt des Validierens findet dabei nach dem erneuten Ermitteln der Materialfeuchtigkeit des Materials statt.

Der Schritt des Validierens der Materialfeuchtigkeit anhand der durch den zweiten Mikrowellensensor gemessenen dielektrischen Materialkonstanten wird durch die Steuerungsund Auswerteeinrichtung durchgeführt.

Das Verfahren umfasst den folgenden Schritt: Trocknen des Materials, zwischen dem Schritt des Ermittelns der Materialfeuchte des Materials und dem Online-Messen der dielektrischen Materialkonstanten des Materials mittels dem zweiten Mikrowellensensor.

In Ausgestaltung kann das Verfahren und/oder die Vorrichtung vorsehen, dass die dielektrischen Materialkonstanten Permeabilität und/oder Permittivität sind.

In Ausgestaltung der Vorrichtung kann vorgesehen sein, dass die dielektrischen Materialkonstanten Permeabilität und/oder Permittivität sind.

Ferner wird erfindungsgemäß ein Trocknungsverfahren umfassend zumindest eine Trocknungseinrichtung zum Trocknen eines Materials bereitgestellt, wobei das Trocknungsverfahren ein vorstehend beschriebenes Verfahren zum Ermitteln der Materialfeuchtigkeit umfasst, wobei die Trocknungseinrichtung anhand der ermittelten Materialfeuchtigkeit des Materials gesteuert oder geregelt wird.

Zudem wird erfindungsgemäß eine Trocknungsvorrichtung zum Trocknen eines Materials bereitstellt, wobei die Trocknungsvorrichtung eine Vorrichtung zum Ermitteln der Materialfeuchtigkeit von Material eine vorstehend beschriebene Vorrichtung, wobei die Trocknungseinrichtung eingerichtet ist, anhand der ermittelten Materialfeuchtigkeit des Materials gesteuert oder geregelt zu werden.

Erfindungsgemäß können somit die Trocknungsparameter innerhalb des Trocknungsverfahrens bzw. innerhalb der Trocknungsvorrichtung gesteuert oder geregelt werden, sodass ein vollautomatisierter Trocknungsprozess nebst Validierung geschaffen wird. Hierdurch ist es möglich, dass sowohl Zeit als auch Kosten gespart werden, da der Trocknungsprozess vollautomatisch ablaufen kann.

Hierzu werden Trocknungsparameter wie beispielsweise Leistung, Energie und Durchlaufgeschwindigkeit bei einer fließbandähnlichen Anordnung eingestellt.

Nachfolgend soll die Erfindung anhand von Ausführungsbeispielen mit Bezug auf die Zeichnungen erläutert werden.

Es zeigt:
- Fig. 1: eine schematische Darstellung einer Vorrichtung zum Ermitteln der Materialfeuchtigkeit nach einer erfindungsgemäßen Ausführungsform;
- Fig. 2: eine schematische Darstellung eines Verfahrens als Flussdiagramm zur Ermittlung der Materialfeuchtigkeit gemäß der Ausführungsform nach Fig. 1;
- Fig. 3: eine schematische Darstellung einer Vorrichtung zum Ermitteln der Materialfeuchtigkeit
- Fig. 4: eine schematische Darstellung eines Verfahrens als Flussdiagramm zur Ermittlung der Materialfeuchtigkeit gemäß der Ausführungsform nach Fig. 3;
- Fig. 5: eine schematische Darstellung einer Mikrowellenmesseinheit;
- Fig. 6: eine schematische Darstellung eines resonanten Mikrowellensensors; und
- Fig. 7: eine schematische Darstellung eines transmittierenden Mikrowellensensors.

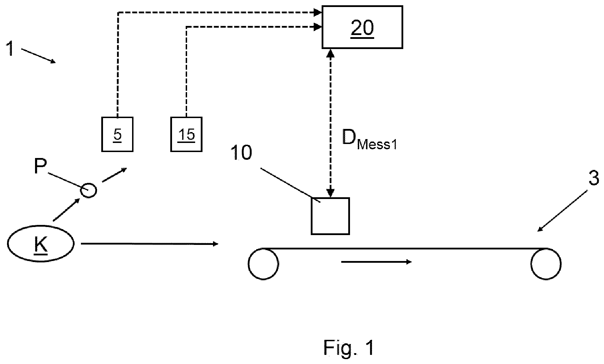

Fig. 1 zeigt eine erfindungsgemäße Ausführungsform einer Vorrichtung 1 zum Ermitteln der Materialfeuchtigkeit von Schüttgut oder Festkörpern K, insbesondere von pyrotechnischen und/oder explosiven Stoffen. Die Vorrichtung 1 umfasst eine Referenziervorrichtung 5, die zum Referenzieren eines Materials durch Ermittlung der Materialfeuchtigkeiteiner Materialprobe P des Materials K in Abhängigkeit der Masse der Materialprobe P. Gemäß dieser Ausführungsform handelt es sich bei der Referenziervorrichtung um eine Dörr-WägeVorrichtung, mit welcher die Materialfeuchtigkeit der Materialprobe Pin Abhängigkeit von ihrer Masse ermittelbar ist. Die Referenziervorrichtung 5 ist dabei offline angeordnet.

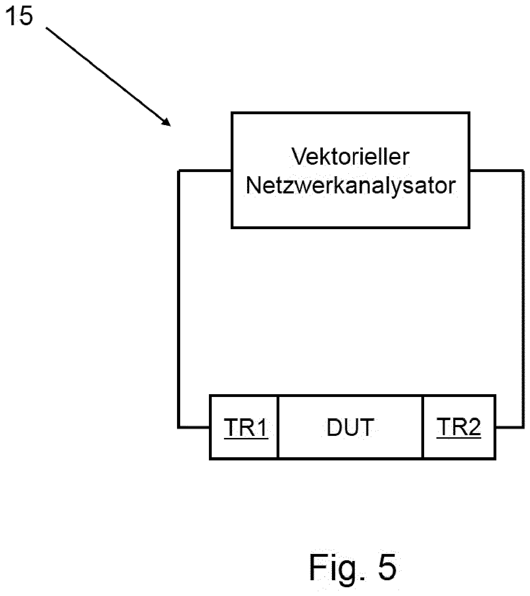

Zudem weist die Vorrichtung 1 eine Mikrowellenmesseinrichtung 15 zum Ermitteln der dielektrischen Materialkonstanten D_{Probe} der Materialprobe P in Abhängigkeit der Materialfeuchtigkeit, auf. Die Mikrowellenmesseinrichtung 15 ist dazu eingerichtet anhand der zuvor durch die Referenziervorrichtung 5 ermittelten Materialfeuchtigkeit dielektrischen Materialkonstanten D_{Probe} der Materialprobe P in Abhängigkeit der Materialfeuchtigkeit zu ermitteln. Der Aufbau der Mikrowellenmesseinrichtung 15 ist in Fig. 5 dargestellt und wird nachfolgend zu Fig. 5 beschrieben.

Die Vorrichtung 1 weist weiterhin eine Steuerungs- und Auswerteeinrichtung 20 auf. Die Steuerungs- und Auswerteeinrichtung 20 ist betriebsmäßig mit der Referenziervorrichtung 5 und mit der Mikrowellenmesseinrichtung 15 verbunden. Die durch die Referenziervorrichtung 5 gewonnenen Daten werden an die Steuerungs- und Auswerteeinrichtung 20 übermittelt und können dort gespeichert werden. Hierzu weist die Steuerungs- und Auswerteeinrichtung 20 zumindest einen Speicher auf. Ebenso werden die durch die Mikrowellenmesseinrichtung 15 gewonnenen Daten an die Steuerungs- und Auswerteeinrichtung 20 übermittelt und können dort gespeichert werden.

Die Vorrichtung weist einen ersten online angeordneten Mikrowellensensor 10. Dieser ist zum Messen der dielektrischen Materialkonstanten Dₘₑₛₛ₁ des Materials K ausgebildet. Dieser ist an einer Produktionslinie 3 des Materials K angeordnet, entlang welcher das Material K transportiert wird. Der Mikrowellensensor 10 ist betriebsmäßig mit der Steuerungs- und Auswerteeinrichtung 20 verbunden und die Steuerungs- und Auswerteeinrichtung 20 ist dazu eingerichtet anhand der durch die Mikrowellenmesseinrichtung 15 dielektrischen Materialkonstanten der Materialprobe P den ersten Mikrowellensensor 10 zu kalibrieren.

Die Steuerungs- und Auswerteeinrichtung 20 ist ferner eingerichtet ist die Materialfeuchtigkeit des Materials K anhand der zuvor online durch den ersten Mikrowellensensor 10 gemessenen dielektrischen Materialkonstanten Dₘₑₛₛ₁ zu ermitteln.

Die Vorrichtung 1 weist ferner einen zweiten online angeordneten Mikrowellensensor 30 auf. Dieser ist zum Messen der dielektrischen Materialkonstanten Dₘₑₛₛ₂ des Materials K ausgebildet. Dieser ist an einer Produktionslinie 3 des Materials K angeordnet, entlang welcher das Schüttgut oder der Festkörper K transportiert werden. Der zweite Mikrowellensensor 30 ist betriebsmäßig mit der Steuerungs- und Auswerteeinrichtung 20 verbunden und die Steuerungsund Auswerteeinrichtung 30 ist dazu eingerichtet anhand der durch die Mikrowellenmesseinrichtung 15 gemessenen dielektrischen Materialkonstanten der Materialprobe P den zweiten Mikrowellensensor 30 zu kalibrieren.

Die Steuerungs- und Auswerteeinrichtung 20 ist ferner eingerichtet ist die Materialfeuchtigkeit des Materials K anhand der zuvor online durch den zweiten Mikrowellensensor 30 gemessenen dielektrischen Materialkonstanten Dₘₑₛₛ₂ zu ermitteln.

Weiterhin ist die Steuerungs- und Auswerteeinrichtung 20 dazu eingerichtet die Materialfeuchtigkeit anhand der durch den zweiten Mikrowellensensor 30 gemessenen dielektrischen Materialkonstanten Dₘₑₛₛ₂ zu validieren. Dazu werden die durch den ersten Mikrowellensensor 10 und die durch den zweiten Mikrowellensensor 30 ermittelte Materialfeuchtigkeit verglichen.

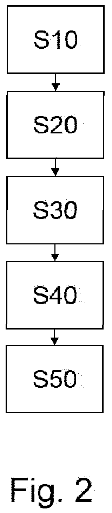

Fig. 2 zeigt eine schematische Darstellung eines Verfahrens zur Ermittlung der Materialfeuchtigkeit gemäß der Ausführungsform nach Fig. 1. Das erfindungsgemäße Verfahren dient zum Ermitteln der Materialfeuchtigkeit des Materials K und umfasst die folgenden Schritte.

Zunächst findet in einem ersten Schritt S10 ein Referenzieren des Materials K mit der Referenziervorrichtung 5 statt. Dies geschieht durch Ermittlung der Materialfeuchtigkeit der Materialprobe P des Materials Kin Abhängigkeit der Masse der Materialprobe P.

Danach wird in einem weiteren Schritt S20 die dielektrischen Materialkonstanten D_{Probe} der Materialprobe P in Abhängigkeit der Materialfeuchtigkeit ermittelt S20. Dies geschieht durch die Mikrowellenmesseinrichtung 15.

Anschließend findet als nächster Schritt S30 ein Kalibrieren des ersten Mikrowellensensors 10, anhand der dielektrischen Materialkonstanten D_{Probe} der Materialprobe P statt.

Danach wird als nächster Schritt S40 ein Online-Messen der dielektrischen Materialkonstanten Dₘₑₛₛ₁ des Materials K mittels des ersten Mikrowellensensors 1 durchgeführt.

Schließlich findet als Schritt S50 ein Ermitteln der Materialfeuchtigkeit des Materials K anhand der zuvor online gemessenen dielektrischen Materialkonstanten Dₘₑₛₛ₁ S50 statt.

Dies geschieht durch die Steuerungs- und Auswerteeinrichtung 20.

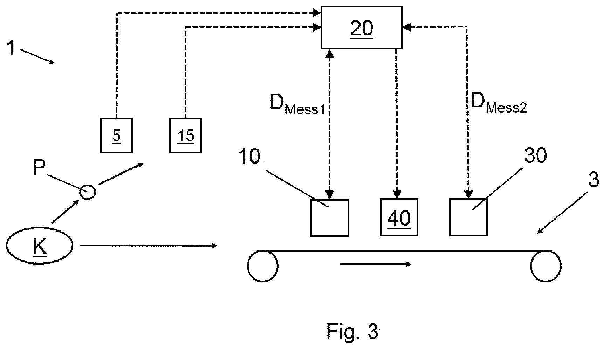

Wie vorstehend bereits ausgeführt ist die Referenziervorrichtung offline angeordnet, sodass der Schritt des Referenzierens des Materials mit einer Referenziervorrichtung (5) offline stattfindet. Fig. 3 zeigt ein weiteres Ausführungsbeispiel der Vorrichtung 1, die auf der Vorrichtung nach Fig. 1 basiert und zusätzlich einen zweiten Mikrowellensensor 30 aufweist. Optional ist eine Mikrowellentrocknungsvorrichtung 40 zum Trocknen des Materials K ausgebildet, die vorzugsweise online zwischen dem ersten Mikrowellensensor 10 und dem zweiten Mikrowellensensor 30 angeordnet ist.

Der zweite Mikrowellensensor 30 misst online die dielektrischen Materialkonstanten D_{Mess2} des Materials K und ist vorzugsweise an einer Linie hinter dem ersten Mikrowellensensor angeordnet. Danach ermittelt die Steuerungs- und Auswerteeinrichtung 20 anhand der gemessenen dielektrischen Materialkonstanten D_{Mess1}, D_{Mess2} die Materialfeuchtigkeit des Materials K.

Anhand dieser durch den zweiten Mikrowellensensor 30 gewonnenen dielektrischen Materialkonstanten D_{Mess2} wird erneut die Materialfeuchte des Materials K ermittelt.

Anhand der zwei Materialfeuchtemesswerte findet eine Validierung der Materialfeuchte des Materials K statt. Die Steuerungs- und Auswerteeinrichtung 20 dazu eingerichtet eine solche Validierung durchzuführen. Hierzu vergleicht diese die erste und zweite online gemessene dielektrische Materialkonstanten D_{Mess1} und D_{Mess2}- Hierdurch werden der erste und der zweite ermittelte Materialfeuchtewert miteinander in Verhältnis gesetzt, also verglichen.

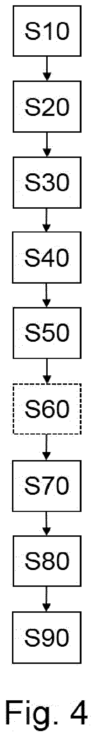

Fig. 4 eine schematische Darstellung eines Verfahrensflusses zur Ermittlung der Materialfeuchtigkeit gemäß der Ausführungsform nach Fig. 3. Das Verfahren basiert auf dem Verfahren, das in Fig. 2 dargestellt ist. Die Schritte S10 bis S50 des Verfahrens gemäß Fig. 4 entsprechen den Schritten des Verfahrens nach Fig. 2.

Das Verfahren weist dabei den nach dem Schritt S50 als nachfolgenden Schritt S70 ein Online-Messen der dielektrischen Materialkonstanten Dₘₑₛₛ₂ des Materials K mittels des zweiten Mikrowellensensors 30 auf.

Anschließend findet als nächster Schritt S80 ein erneutes Ermitteln der Materialfeuchtigkeit des Materials (K) anhand der zuvor online gemessenen dielektrischen Materialkonstanten Dₘₑₛₛ₂ statt. Ferner umfasst das Verfahren als nachfolgenden Schritt S90 ein Validieren der Materialfeuchtigkeit anhand der durch den zweiten Mikrowellensensor 30 gemessenen dielektrischen Materialkonstanten Dₘₑₛₛ₂ auf.

Zwischen den Schritten S50 und S70 wird ein Schritt S60 durchgeführt in dem ein Trocknen des Materials K mittels dem zweiten Mikrowellensensor 30 durchgeführt wird.

Fig. 5 zeigt eine schematische Darstellung einer Mikrowellenmesseinheit 15, die als vektorieller Netzwerkanalysator ausgebildet ist. Solche vektoriellen Netzwerkanalysatoren werden von verschiedenen Herstellern hergestellt und können über diese bezogen werden.

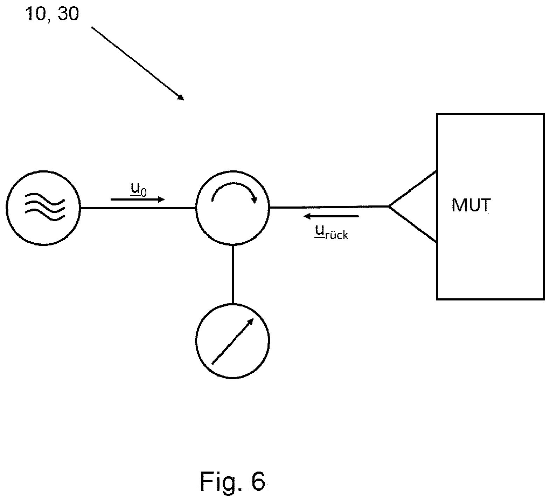

Fig. 6 zeigt eine schematische Darstellung eines resonanten Mikrowellensensors 10, der als resonanter 1-Tor Sensor ausgebildet ist. Hierbei werden sowohl die in das Material eingestrahlten elektromagnetischen Wellen, als auch die vom Material reflektierten Wellen gemessen. Der gemessene Reflektionsfaktor ist ein Maß für die dielektrischen Materialeigenschaften des Materials M. Durch einen resonanten 1-Tor Sensor lassen sich Eindringtiefen bis zu 30cm gut realisieren und eine Feuchtemessung im Volumen des Materials sind möglich.

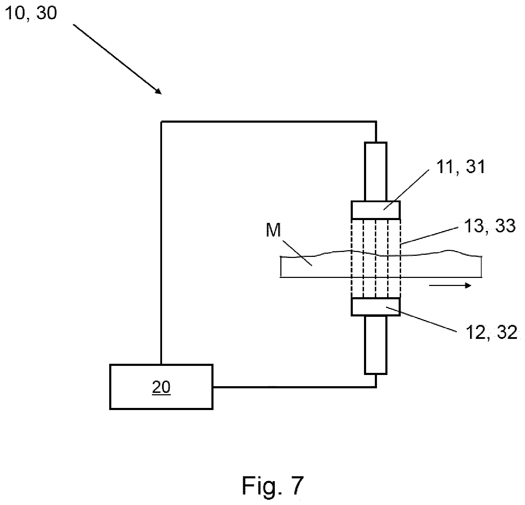

Fig. 7 zeigt eine schematische Darstellung des ersten und zweiten Mikrowellensensors 10', 30', die jeweils als ein transmittierender Mikrowellensensors 10', 30', insbesondere als transmittierender 2-Tor Sensor ausgebildet sind. Ein solcher transmittierender Mikrowellensensor 10', 30' weist sowohl einen Mikrowellensender 11, 31 und einen Mikrowellenempfänger 12, 32 auf, die beispielsweise oberhalb und unterhalb einer Förderstrecke des Materials M installiert sind.

Hierdurch kann wie oben beschrieben die Materialfeuchte eines kontinuierlichen Materialstroms der Materials M überprüft werden.

Darüber hinaus kann ein solches System einen optionalen Sensor zur Abstandskompensation aufweisen.

### BEZUGSZEICHENLISTE

- 1: Vorrichtung
- 3: Produktionsline
- 5: Referenziervorrichtung
- 10: erster Mikrowellensensor
- 15: Mikrowellenmesseinrichtung
- 20: Steuerungs- und Auswerteeinrichtung
- 30: zweiter Mikrowellensensor
- 40: Mikrowellentrocknungsvorrichtung

- D_{Probe}: dielektrischen Materialkonstanten der Probe
- Dₘₑₛₛ₂: dielektrischen Materialkonstanten gemessen durch den ersten Mikrowellensensor
- Dₘₑₛₛ₂: dielektrischen Materialkonstanten gemessen durch den zweiten Mikrowellensensor
- K: Schüttgut oder Festkörper
- P: Materialprobe

## Patentansprüche

1. Verfahren zum Ermitteln der Materialfeuchtigkeit eines pyrotechnischen und/oder explosiven Stoffs (K), umfassend die folgenden Schritte:
Referenzieren des pyrotechnischen und/oder explosiven Stoffs mit einer Referenziervorrichtung (5) durch Ermittlung der Materialfeuchtigkeit einer Materialprobe (P) des pyrotechnischen und/oder explosiven Stoffs (K) in Abhängigkeit der Masse der Materialprobe (P) (S10);
Ermitteln der dielektrischen Materialkonstanten (D_{Probe}) der Materialprobe (P) in Abhängigkeit der Materialfeuchtigkeit (S20);
Kalibrieren eines ersten Mikrowellensensors (10), anhand der dielektrischen Materialkonstanten (D_{Probe}) der Materialprobe (P) (S30);
Online-Messen der dielektrischen Materialkonstanten (Dₘₑₛₛ₁) des pyrotechnischen und/oder explosiven Stoffs (K) mittels des ersten Mikrowellensensors (10) (S40);
Ermitteln der Materialfeuchtigkeit des pyrotechnischen und/oder explosiven Stoffs (K) anhand der zuvor online gemessenen dielektrischen Materialkonstanten (Dₘₑₛₛ₁) (S50);
Trocknen des pyrotechnischen und/oder explosiven Stoffs (K) (S60) mittels eines zweiten Mikrowellensensors (30); und
Online-Messen der dielektrischen Materialkonstanten (Dₘₑₛₛ₂) des Stoffs (K) mittels des zweiten Mikrowellensensors (30) (S70); Erneutes Ermitteln der Materialfeuchtigkeit des pyrotechnischen und/oder explosiven Stoffs (K) anhand der zuvor online gemessenen dielektrischen Materialkonstanten (Dₘₑₛₛ₂) (S80) mittels des zweiten Mikrowellensensors.

2. Verfahren nach Anspruch 1, **dadurch gekennzeichnet, dass** das Verfahren ferner den folgenden Schritt umfasst:
Validieren der Materialfeuchtigkeit anhand der durch den zweiten Mikrowellensensor (30) gemessenen dielektrischen Materialkonstanten (Dₘₑₛₛ₂) (S90).

3. Verfahren nach einem der vorhergehenden Ansprüche, **dadurch gekennzeichnet, dass** der folgende Schritt zwischen dem Schritt des Ermittelns der Materialfeuchtigkeit des Materials (K) (S50) und dem Online-Messen der dielektrischen Materialkonstanten (Dₘₑₛₛ₂) des Materials (K) mittels dem zweiten Mikrowellensensor (30) (S70) durchgeführt wird:
Trocknen des Materials (K) (S60).

4. Verfahren nach einem der vorhergehenden Ansprüche, **dadurch gekennzeichnet, dass** die dielektrischen Materialkonstanten (D_{Probe}, Dₘₑₛₛ₁, Dₘₑₛₛ₂) Permeabilität und/oder Permittivität sind.

5. Verfahren nach einem der vorhergehenden Ansprüche, **dadurch gekennzeichnet, dass** der Schritt des Referenzierens des pyrotechnischen und/oder explosiven Stoffs (K) mit einer Referenziervorrichtung (5) offline stattfindet.

6. Trocknungsverfahren umfassend ein Verfahren zum Ermitteln der Materialfeuchtigkeit nach einem der Ansprüche 1 bis 5**,**
wobei eine Trocknungseinrichtung anhand der ermittelten Materialfeuchtigkeit des pyrotechnischen und/oder explosiven Stoffs (K) gesteuert oder geregelt wird.

7. Vorrichtung (1) zum Ermitteln der Materialfeuchtigkeit eines pyrotechnischen und/oder explosiven Stoffs (K), umfassend
- eine Produktionslinie (3), entlang welcher der pyrotechnische und/oder explosive Stoff (K) transportiert wird;
- eine Referenziervorrichtung (5) zum Referenzieren eines Materials durch Ermittlung der Materialfeuchtigkeit einer Materialprobe (P) des pyrotechnischen und/oder explosiven Stoffs (K) in Abhängigkeit der Masse der Materialprobe (P);
- eine Mikrowellenmesseinrichtung (15) zum Ermitteln der dielektrischen Materialkonstanten (D_{Probe}) der Materialprobe (P) in Abhängigkeit der Materialfeuchtigkeit;
- eine Steuerungs- und Auswerteeinrichtung (20), die eingerichtet ist anhand der dielektrischen Materialkonstanten der Materialprobe (P) einen ersten Mikrowellensensor (10) zu kalibrieren; und
- den ersten online angeordneten Mikrowellensensor (10) zum Messen der dielektrischen Materialkonstanten (Dₘₑₛₛ₁) des pyrotechnischen und/oder explosiven Stoffs (K),
wobei die Steuerungs- und Auswerteeinrichtung (20) ferner eingerichtet ist die Materialfeuchtigkeit des pyrotechnischen und/oder explosiven Stoffs (K) anhand der zuvor online gemessenen dielektrischen Materialkonstanten (Dₘₑₛₛ₁) zu ermitteln,
wobei die Vorrichtung einen zweiten Mikrowellensensor (30) zum Trocknen des pyrotechnischen und/oder explosiven Stoffs (K) aufweist,
wobei die Steuerungs- und Auswerteeinrichtung (20) ferner eingerichtet ist, ein Online-Messen der dielektrischen Materialkonstanten (Dₘₑₛₛ₂) des Stoffs (K) mittels des zweiten Mikrowellensensors (30) (S70) durchzuführen, und die Steuerungs- und Auswerteeinrichtung (20) dazu eingerichtet ist anhand der zuvor mittels des zweiten Mikrowellensensors (30) online gemessenen dielektroschen Materialkonstanten (_{Dmess2}), die Materialfeuchtigkeit des pyrotechnischen und/oder explosiven Stoffs (K) zu ermitteln (S80).

8. Vorrichtung (1) nach Anspruch 7, **dadurch gekennzeichnet, dass** die Steuerungsund Auswerteeinrichtung (20) dazu eingerichtet ist, die Materialfeuchtigkeit mittels des zweiten online angeordneten Mikrowellensensors (30) zu validieren.

9. Vorrichtung (1) nach einem der Ansprüche 7 oder 8, **dadurch gekennzeichnet, dass** die dielektrischen Materialkonstanten Permeabilität und/oder Permittivität sind.

10. Vorrichtung (1) nach einem der Ansprüche 7 bis 9, **dadurch gekennzeichnet, dass** die Referenziervorrichtung (5) zum Referenzieren des pyrotechnischen und/oder explosiven Stoffs (K) offline angeordnet ist.

11. Trocknungsvorrichtung zum Trocknen eines pyrotechnischen und/oder explosiven Stoffs (K), **dadurch gekennzeichnet, dass** die Trocknungsvorrichtung eine Vorrichtung (1) zum Ermitteln der Materialfeuchtigkeit des pyrotechnischen und/oder explosiven Stoffs (K) nach einem der Ansprüche 7 bis 10 umfasst, wobei die Trocknungseinrichtung eingerichtet ist, anhand der ermittelten Materialfeuchtigkeit des pyrotechnischen und/oder explosiven Stoffs (K) gesteuert oder geregelt zu werden.

## Claims

1. Method for determining the material moisture of a pyrotechnic and/or explosive substance (K), comprising the following steps:
referencing the pyrotechnic and/or explosive substance using a referencing device (5) by determining the material moisture of a material sample (P) of the pyrotechnic and/or explosive substance (K) on the basis of the mass of the material sample (P) (S10);
determining the dielectric material constants (D_{Probe}) of the material sample (P) on the basis of the material moisture (S20);
calibrating a first microwave sensor (10) on the basis of the dielectric material constants (D_{Probe}) of the material sample (P) (S30);
online measurement of the dielectric material constants (Dₘₑₛₛ₁) of the pyrotechnic and/or explosive substance (K) by means of the first microwave sensor (10) (S40);
determining the material moisture of the pyrotechnic and/or explosive substance (K) on the basis of the dielectric material constants (Dₘₑₛₛ₁) previously measured online (S50);
drying the pyrotechnic and/or explosive substance (K) by means of a second microwave sensor (30) (S60); and
online measurement of the dielectric material constants (Dₘₑₛₛ₂) of the substance (K) by means of the second microwave sensor (30) (S70); redetermining the material moisture of the pyrotechnic and/or explosive substance (K) on the basis of the dielectric material constants (Dₘₑₛₛ₂) previously measured online by means of the second microwave sensor (S80).

2. Method according to claim 1, **characterized in that** the method further comprises the following step:
validating the material moisture on the basis of the dielectric material constants (Dₘₑₛₛ₂) measured by the second microwave sensor (30) (S90).

3. Method according to any of the preceding claims, **characterized in that** the following step is carried out between the step of determining the material moisture of the material (K) (S50) and the online measurement of the dielectric material constants (Dₘₑₛₛ₂) of the material (K) by means of the second microwave sensor (30) (S70):
drying the material (K) (S60).

4. Method according to any of the preceding claims, **characterized in that** the dielectric material constants (D_{Probe}, Dₘₑₛₛ₁, Dₘₑₛₛ₂) are permeability and/or permittivity.

5. Method according to any of the preceding claims, **characterized in that** the step of referencing the pyrotechnic and/or explosive substance (K) using a referencing device (5) takes place offline.

6. Drying method comprising a method for determining the material moisture according to any of claims 1 to 5, wherein a drying apparatus is controlled or regulated on the basis of the determined material moisture of the pyrotechnic and/or explosive substance (K).

7. Device (1) for determining the material moisture of a pyrotechnic and/or explosive substance (K), comprising
- a production line (3) along which the pyrotechnic and/or explosive substance (K) is transported;
- a referencing device (5) for referencing a material by determining the material moisture of a material sample (P) of the pyrotechnic and/or explosive substance (K) on the basis of the mass of the material sample (P);
- a microwave measuring apparatus (15) for determining the dielectric material constants (D_{Probe}) of the material sample (P) on the basis of the material moisture;
- a control and evaluation apparatus (20) which is designed to calibrate a first microwave sensor (10) on the basis of the dielectric material constants of the material sample (P); and
- the first microwave sensor (10), which is arranged online, for measuring the dielectric material constants (Dₘₑₛₛ₁) of the pyrotechnic and/or explosive substance (K),
wherein the control and evaluation apparatus (20) is further designed to determine the material moisture of the pyrotechnic and/or explosive substance (K) on the basis of the dielectric material constants (Dₘₑₛₛ₁) previously measured online,
wherein the device comprises a second microwave sensor (30) for drying the pyrotechnic and/or explosive substance (K),
wherein the control and evaluation apparatus (20) is further designed to carry out online measurement of the dielectric material constants (Dₘₑₛₛ₂) of the substance (K) by means of the second microwave sensor (30) (S70), and the control and evaluation apparatus (20) is designed to determine the material moisture of the pyrotechnic and/or explosive substance (K) on the basis of the dielectric material constants (_{Dmess2}) previously measured online by means of the second microwave sensor (30) (S80).

8. Device (1) according to claim 7, **characterized in that** the control and evaluation apparatus (20) is designed to validate the material moisture by means of the second microwave sensor (30), which is arranged online.

9. Device (1) according to any of claims 7 or 8, **characterized in that** the dielectric material constants are permeability and/or permittivity.

10. Device (1) according to any of claims 7 to 9, **characterized in that** the referencing device (5) for referencing the pyrotechnic and/or explosive substance (K) is arranged offline.

11. Drying device for drying a pyrotechnic and/or explosive substance (K), **characterized in that** the drying device comprises a device (1) for determining the material moisture of the pyrotechnic and/or explosive substance (K) according to any of claims 7 to 10, the drying apparatus being designed to be controlled or regulated on the basis of the determined material moisture of the pyrotechnic and/or explosive substance (K).

## Revendications

1. Procédé pour déterminer l'humidité de matériau d'une substance pyrotechnique et/ou explosive (K), comprenant les étapes suivantes :
le référencement de la substance pyrotechnique et/ou explosive avec un dispositif de référencement (5) par détermination de l'humidité de matériau d'un échantillon de matériau (P) de la substance pyrotechnique et/ou explosive (K) en fonction de la masse de l'échantillon de matériau (P) (S10) ;
la détermination des constantes de matériau diélectriques (D_{Probe}) de l'échantillon de matériau (P) en fonction de l'humidité de matériau (S20) ;
l'étalonnage d'un premier capteur à micro-ondes (10), à l'aide des constantes de matériau diélectriques (D_{Probe}) de l'échantillon de matériau (P) (S30) ;
la mesure en ligne des constantes de matériau diélectriques (Dₘₑₛₛ₁) de la substance pyrotechnique et/ou explosive (K) au moyen du premier capteur à micro-ondes (10) (S40) ;
la détermination de l'humidité de matériau de la substance pyrotechnique et/ou explosive (K) à l'aide des constantes de matériau diélectriques (Dₘₑₛₛ₁) (S50) mesurées précédemment en ligne ;
le séchage de la substance pyrotechnique et/ou explosive (K) (S60) au moyen d'un deuxième capteur à micro-ondes (30) ; et
la mesure en ligne des constantes de matériau diélectriques (Dₘₑₛₛ₂) de la substance (K) au moyen du deuxième capteur à micro-ondes (30) (S70) ; à nouveau la détermination de l'humidité de matériau de la substance pyrotechnique et/ou explosive (K) à l'aide des constantes de matériau diélectriques (Dₘₑₛₛ₂) (S80) mesurées précédemment en ligne au moyen du deuxième capteur à micro-ondes.

2. Procédé selon la revendication 1, **caractérisé en ce que** le procédé comprend en outre l'étape suivante :
la validation de l'humidité de matériau à l'aide des constantes de matériau diélectriques (Dₘₑₛₛ₂) mesurées par le deuxième capteur à micro-ondes (30) (S90).

3. Procédé selon l'une quelconque des revendications précédentes, **caractérisé en ce que** l'étape suivante est réalisée entre l'étape de détermination de l'humidité de matériau (K) (S50) et la mesure en ligne des constantes de matériau diélectriques (Dₘₑₛₛ₂) du matériau (K) au moyen du deuxième capteur à micro-ondes (30) (S70) :
le séchage du matériau (K) (S60).

4. Procédé selon l'une quelconque des revendications précédentes, **caractérisé en ce que** les constantes de matériau diélectriques (D_{Probe}, Dₘₑₛₛ₁, Dₘₑₛₛ₂) sont la perméabilité et/ou la permittivité.

5. Procédé selon l'une quelconque des revendications précédentes, **caractérisé en ce que** l'étape de référencement de la substance pyrotechnique et/ou explosive (K) avec un dispositif de référencement (5) se fait hors ligne.

6. Procédé de séchage comprenant un procédé pour déterminer l'humidité de matériau selon l'une quelconque des revendications 1 à 5, dans lequel un dispositif de séchage est commandé ou réglé à l'aide de l'humidité de matériau déterminée de la substance pyrotechnique et/ou explosive (K).

7. Dispositif (1) pour déterminer l'humidité de matériau d'une substance pyrotechnique et/ou explosive (K), comprenant
- une ligne de production (3), le long de laquelle la substance pyrotechnique et/ou explosive (K) est transportée ;
- un dispositif de référencement (5) pour référencer un matériau par détermination de l'humidité de matériau d'un échantillon de matériau (P) de la substance pyrotechnique et/ou explosive (K) en fonction de la masse de l'échantillon de matériau (P) ;
- un dispositif de mesure à micro-ondes (15) pour déterminer les constantes de matériau diélectriques (D_{Probe}) de l'échantillon de matériau (P) en fonction de l'humidité de matériau ;
- un dispositif de commande et d'évaluation (20), qui est conçu pour étalonner un premier capteur à micro-ondes (10) à l'aide des constantes de matériau diélectriques de l'échantillon de matériau (P) ; et
- le premier capteur à micro-ondes (10) disposé en ligne pour mesurer les constantes de matériau diélectriques (Dₘₑₛₛ₁) de la substance pyrotechnique et/ou explosive (K), dans lequel le dispositif de commande et d'évaluation (20) est en outre conçu pour déterminer l'humidité de matériau de la substance pyrotechnique et/ou explosive (K) à l'aide des constantes de matériau diélectriques (Dₘₑₛₛ₁) mesurées précédemment en ligne, dans lequel le dispositif présente un deuxième capteur à micro-ondes (30) pour sécher la substance pyrotechnique et/ou explosive (K),
dans lequel le dispositif de commande et d'évaluation (20) est en outre conçu pour effectuer une mesure en ligne des constantes de matériau diélectriques (Dₘₑₛₛ₂) de la substance (K) au moyen du deuxième capteur à micro-ondes (30) (S70), et le dispositif de commande et d'évaluation (20) est agencé pour déterminer (S80) l'humidité de matériau de la substance pyrotechnique et/ou explosive (K) à l'aide des constantes de matériau diélectriques (Dₘₑₛₛ₂) mesurées précédemment en ligne au moyen du deuxième capteur à micro-ondes (30).

8. Dispositif (1) selon la revendication 7, **caractérisé en ce que** le dispositif de commande et d'évaluation (20) est conçu pour valider l'humidité de matériau au moyen du deuxième capteur à micro-ondes (30) disposé en ligne.

9. Dispositif (1) selon l'une quelconque des revendications 7 ou 8, **caractérisé en ce que** les constantes de matériau diélectriques sont la perméabilité et/ou la permittivité.

10. Dispositif (1) selon l'une quelconque des revendications 7 à 9, **caractérisé en ce que** le dispositif de référencement (5) pour référencer la substance pyrotechnique et/ou explosive (K) est disposé hors ligne.

11. Dispositif de séchage pour sécher une substance pyrotechnique et/ou explosive (K), **caractérisé en ce que** le dispositif de séchage comprend un dispositif (1) pour déterminer l'humidité de matériau de la matière pyrotechnique et/ou explosive (K) selon l'une quelconque des revendications 7 à 10, dans lequel le dispositif de séchage est conçu pour être commandé ou régulé à l'aide de l'humidité de matériau déterminée de la substance pyrotechnique et/ou explosive (K).
